# EUROPEAN PATENT SPECIFICATION

(11) **EP 0 333 215 B1**
(45) Date of publication and mention of the grant of the patent: **31.08.1994**
(21) Application number: 89104816.7
(22) Date of filing: 17.03.1989
(51) Int. Cl.: G06F 12/08, G06F 12/12

(54) **Distributed reference and change table for a virtual memory system**
Verteilte Referenz- und Änderungstabelle für ein virtuelles Speichersystem
Table distribuée de référence et de changement pour un système de mémoire virtuelle

(30) Priority: 18.03.1988 US 170483
(43) Date of publication of application: 20.09.1989
(73) Proprietor: WANG LABORATORIES INC., Lowell, MA 01851 (US)
(72) Inventor: Ryan, Robert P., Marlborough, MA. 01752 (US); Cheung, Kin Ling, North Andover, MA. 01845 (US)
(74) Representative: Behrens, Dieter, Dr.-Ing.

(56) References cited:
- US-A- 4 084 230
- IBM TECHNICAL DISCLOSURE BULLETIN, vol. 23, no. 12, May 1981, pages 5516-5519,New York, US; R.L. HOFFMAN et al.: "Reference and change bit recording"

## Description

This invention relates in general to digital data processing systems and, in particular, to a digital data processing system having a virtual memory as claimed in the preamble of Claim 1.

### BACKGROUND OF THE INVENTION:

In a virtual memory digital data processing system a central processing unit (CPU) issues virtual memory addresses which are translated into real, or physical, memory addresses. Such a virtual memory system typically comprises a physical memory such as random access memory (RAM) typically having a number of storage locations less than the address capability of the CPU. The virtual memory system also typically comprises a mass storage system such as a magnetic disk or tape having a storage capacity which typically far exceeds that of the physical memory size, and also a virtual memory control mechanism. The virtual memory control mechanism typically comprises circuitry adapted for translating a CPU generated virtual address into a physical memory address, circuitry adapted for determining if the data addressed by the CPU is currently resident in the physical memory and circuitry adapted for suspending a CPU access until the desired data can be retrieved from the mass storage device and stored in the physical memory. Data retrieved from the mass storage device and stored in physical memory may also be subsequently rerecorded within the mass storage device. The data transferred between mass storage and physical memory is typically organized into blocks of data having, for a particular data processing system, a predefined format. One format is that of a variable data length segment. Another format is that of a fixed data length page. A still further format is a hybrid segment/page typed of data block.

In any type of virtual memory data processing system a desired feature is that the limited and valuable resources of the physical memory be efficiently utilized. Inasmuch as a CPU access to data resident in physical memory may occur at least an order of magnitude faster than an access to data which is not resident in physical memory and which must therefore be retrieved from the mass storage device, it can be appreciated that the continued residency of appropriate data within the physical memory is an important concern. Another important concern is that data which is modified by the CPU, while resident in physical memory, be accurately rerecorded into the mass storage device. In order to accomplish these important goals it has been known to provide the virtual memory control mechanism with circuitry adapted for recording both the occurrence of a CPU access to a particular block of data in physical memory and also whether the data was modified by a write type of access. Such circuitry may be referred to as a reference and change table (RCT) and typically comprises a memory device having a predetermined number of storage locations for recording the occurrence of a CPU access to a particular data block and whether the access was a write type of access.

One particular problem with conventional RCTs is that they are embodied in a single logical element or a plurality of logical elements and are typically disposed withing the virtual memory control system. These centralized RCTs typically have a fixed storage capacity which may represent a storage capacity substantially equal to the maximum virtual address capability of the CPU. For example, if the CPU has 24 address bits, the upper eight bits may define a particular page of data within virtual memory while the lower 16 bits may represent an index into the page of virtual memory space organized as 256 pages each comprising 65,536 memory locations. The RCT would consequently be required to have, for example, 256 memory locations (one for each page). However, if the data processing system only has the equivalent of 16 pages of physical memory installed, it can be appreciated that additional system cost, represented at least by the unused capacity of the RCT, has been needlessly incurred. Inasmuch as many modern CPUs, which typically comprise a microprocessor device, have a virtual memory addressing capability of hundreds of megabytes of data or more, the required storage capacity of an associated centralized RCT may be unacceptably large. Even if, for a given system, the RCT has a fixed, smaller storage capacity than the maximum virtual memory address capability of the CPU the RCT capacity may still need to be made larger than necessary in order to accommodate projected increase in system memory capacity. The fixed storage capacity of such a reduced capacity RCT may then subsequently prove disadvantageous if it is desired to increase the system storage capacity beyond the originally designed capacity, such as by attaching additional memory modules to the system. The fixed size of the RCT thus imposes a maximum limit on the virtual and physical memory space of the system.

It is therefore one object of the invention to provide a system RCT of variable storage capacity.

It is a further object of the invention to provide a modular RCT which is physically distributed throughout the physical memory space of a virtual memory data processing system.

It is one still further object of the invention to provide a modular, distributed RCT for a virtual memory data processing system which readily accommodates the expansion of the virtual memory space up to the maximum addressing capability of the data processing system CPU.

It is also an object of the invention to provide a memory module adapted for being attached to a virtual memory data processing system which comprises an integral RCT having a storage capacity equal to the number of virtual memory data blocks which may be stored within the memory module.

It is still further object of the invention to provide a memory carrier module adapted for being coupled to a virtual memory data processing system and having one or more memory modules disposed thereon, each of the memory modules having an integral RCT.

### SUMMARY OF THE INVENTION

The foregoing problems are overcome by the features claimed in Claim 1. The invention comprises a modular, distributed reference and change table which comprises a reference and change table storage device for recording an occurrence of an access and a type of access to a specific address location within a memory means, the memory means being organized into a predetermined number n of blocks each comprising a plurality of memory address locations. The memory means is disposed upon a memory module operably coupled to a data processing system bus, the reference and change table storage device also being disposed upon the memory module and also operably coupled to the data processing system bus.

The reference and change table storage device comprises means for storing data, the data storing means having a number of storage locations at least equal to n; means for determining which block of the n blocks is accessed; means, responsive to the operation of the determining means, for storing data at a specific storage location within the data storing means wherein the specific storage location corresponds to the number of the accessed block. The stored data is indicative of at least the occurrence of the access to the block and also if the access was a data write type of access. The reference and change table storage device also comprises means, responsive to a first type of access by a data processing system, for outputting to the data processing system bus a content of a specific location within the data storing means to indicate, for the corresponding block, a nonaccessed condition.

Also in accordance with the invention there is disclosed a memory module having a plurality of read/write memories and a reference and change table, disposed upon the memory module, for indicating the reference and change status of individual blocks of memory locations within the memories. There is further disclosed a memory unit comprised of a memory carrier module having one or more memory modules disposed thereon. In accordance with the invention, the reference and change table is distributed throughout the physical memory space of the virtual memory system inasmuch as each memory module comprises an associated refernce and change table having a storage capacity at least equal to the number of blocks of physical memory represented by the memory module.

### BRIEF DESCRIPTION OF THE DRAWINGS

These and other aspects of the invention will be made more apparent hereinafter in the Detailed Description of the Invention read in conjunction with the accompanying drawing, wherein:
Fig. 1 is a block diagram of an illustrative virtual memory data processing system having a modular reference and change table distributed over a plurality of memory modules;
Fig. 2a is a block diagram showing one of the memory modules of Fig. 1, the memory module having an integral RCT in accordance with one aspect of the invention;
Fig. 2b is a block diagram showing a representative one of the memories 40;
Fig. 2c is a representative timing diagram showing the operation of RAS * and CAS* for the memory 40 of fig. 2b;
Fig. 3 is a schematic diagram showing one embodiment of circuitry operable for implementing the RCT of Fig. 2a;
Figs. 4a and 4b are timing diargams which illustrate the operation of the circuitry of Fig. 3;
Fig. 5 is a block diagram showing a plurality of the memory modules of Fig. 2a, each having an integral reference and change table, each being disposed upon a common memory carrier module.
Fig. 6 is a block diagram of a 32 data bit memory module showing a poriton of the signal lines coupled thereto;
Fig. 7 is a graph showing the allocation of address bits for a 32 bit data word and for a 64 bit data word;
Fig. 8 is a block diagram showing two of the memory modules of Fig. 7 for use in a 64 data bit data processing system; and
Fig. 9 shows one embodiments of circuitry operable for implementing the 64 bit system of Fig. 8.

### DETAILED DESCRIPTION OF THE INVENTION

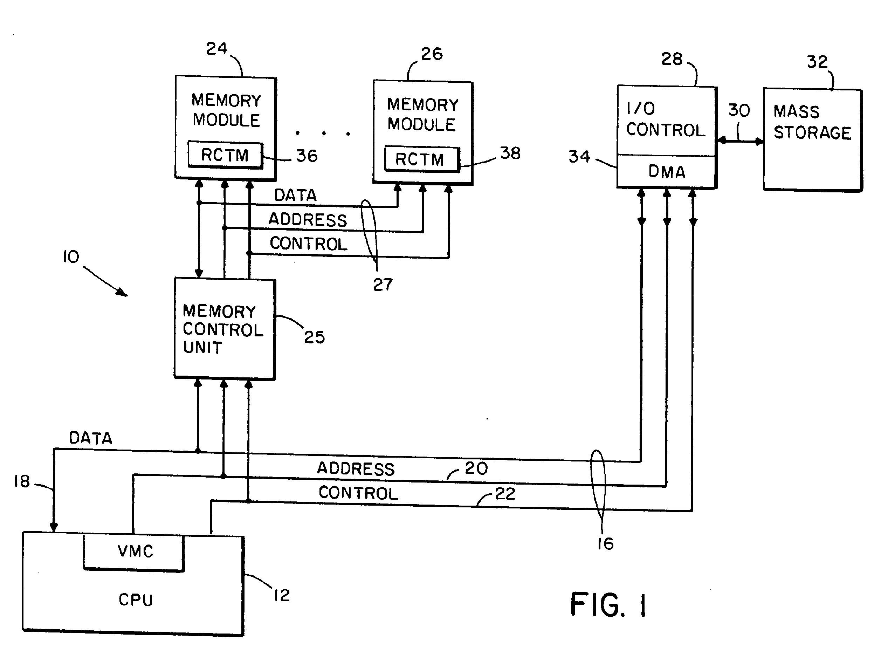

Referring now to Fig. 1 there is shown in block diagram form a virtual memory data processing system 10 comprised of a central processing unit (CPU) 12 having a virtual memory control (VMC) 14. CPU 12 is coupled to a virtual memory control (VMC) 14. CPU 12 is coupled to a system bus 16 which comprises a plurality of groups of signal lines, such as a bidirectional data bus signal line group 18, an address bus signal line group 20 and a control signal line group 22. Data bus signal group 18 is organized in byte fashion and may comprise, for example, 32 or 64 bidirectional signal lines for coupling data between the CPU 12 and a first memory unit, or module 24, a second memory module 26, and an I/O control 28. The data bus signal group 18 may also comprise additional bits related to the operation of an error detection and correction circuit (EDAC), not shown. The EDAC is typically disposed within CPU 12 or VMC 14.

Also coupled to modules 24, 26 and 28 are the address bus 20 and control bus 22. Of course, the system 10 may comprise either less than or more than the two memory modules 24 and 26.

In a preferred embodiment of the invention memory modules 24 and 26 are coupled to CPU 12 through a memory control unit (MCU) 25 via a memory bus 27. MCU 25 in the preferred embodiment performs memory timing, selection, control and refresh functions; such as multiplexing the address bus 20 into memory row and column addresses and asserting row and column address strobe signals.

Address bus 20 is output by VMC 14, the logical state of the address bus 20 being expressive of a physical address within, for example, one of the memory modules 24 or 26. VMC 14 is operable for translating a virtual memory address generated by CPU 12 into a physical memory address. Control bus 22 typically comprises memory and I/O read and write signal lines and other signal lines such as lines expressive of bus error conditions, bus arbitration states and bus timing and synchronization.

I/O control 28 may be coupled via a bus 30 to an I/O device such as a data communications port or, as illustrated, to a mass storage unit 32 which may comprise a rotating magnetic disk, a magnetic tape or any other storage device operable for storing data and computer program instructions. I/O control 28 may also comprise a direct memory access (DMA) circuit 34 which is operable for directly transferring data to and from the mass storage unit 32 and memory locations within either the memory module 24 or 26. Movement of data between mass storage unit 32 and memory is typically characterized as an I/O type of memory access as opposed to a CPU 12 memory access. As such, control bus 22 comprises and I/O signal line which is indicative of whether a given memory access is an I/O access. Of course, in some systems the DMA 34 may be physically located within the CPU 12.

In accordance with the invention, each of the memory modules 24 and 26 comprise a memory reference and change table module (RCTM) 36 and 38, respectively.

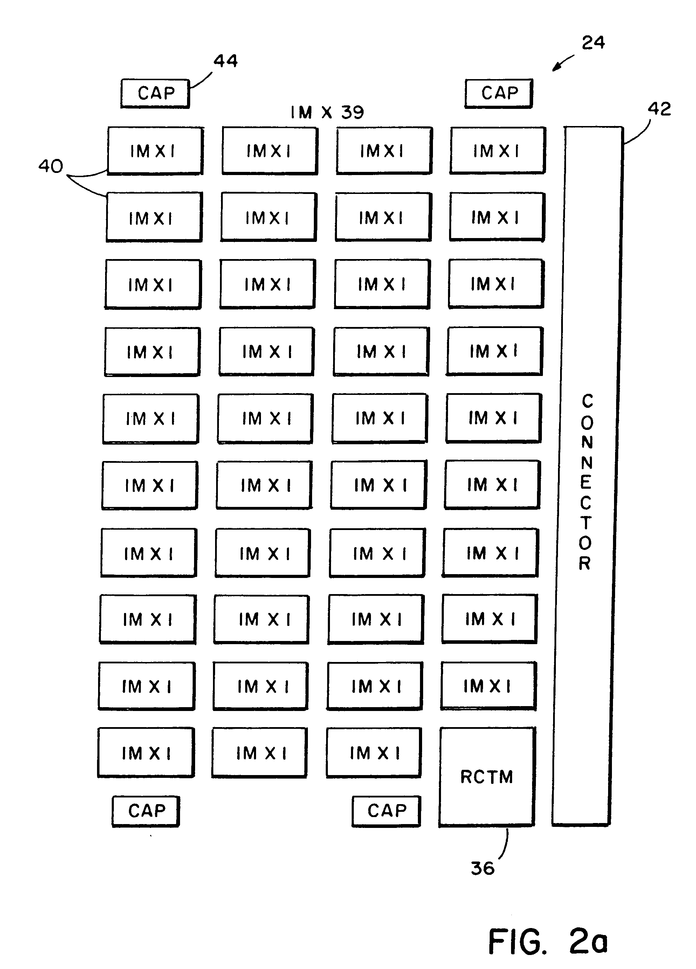

Referring now to Fig. 2a there is shown in block diagram form one of the memory modules of Fig. 1, specifically, the memory module 24. As can be seen, memory module 24 comprises a plurality of memory devices 40, which in an illustrative embodiment of the invention are each dynamic random access memory (DRAM). In the embodiment shown in Fig. 2a the memory module 24 comprises 39 DRAM devices, each of which is operable for storing approximately one meillion bits of information. There are 39 DRAM devices 40 illustrated, 32 of which store program instructions or data, that is, four eight-bit bytes of program instructions or data. The remaining seven DRAM devices store error detection and correction bits which are utilized to detect double bit and correct single bit data errors which may occur within the DRAM devices 40. These seven error detection and correction bits are optional and may not be utilized in some systems. The memory module 24 may also comprise a connector 42 which is operable for coupling a plurality of digital signals from, for example, the bus 27 to the memory module 24. These signals include operating power (+5V and OV), a plurality of multiplexed address lines (A0-A9), a plurality of data lines (D0-D31 or D0-D63), ther error detection and correction data bits (CB0-CB6), and a plurality of memory control signal lines (RAS*, CAS*, W*). The memory module 24 also comprises the aforementioned RCTM 36, which is also coupled to certain of the signal lines (A0-A9, RAS*, CAS*, W*, RRCT*, TRCT*, I/O and UPPER) in a manner which will be disclosed below.

The memory module 24 also comprises a substrate, which may be a printed circuit card of well known construction having the plurality of memory devices soldered or otherwise coupled thereto, including the RCTM 36 and other components such as power supply filtering capacitors 44. In this regard, RCTM 36 may be comprised of a plurality of discrete logic devices coupled together as will be described. Preferably, RCTM 36 is a unitary integrated circuit device, such as a gate array, which achieves a lower power consumption and a lower surface area utilization than a plurality of devices.

It should be appreciated that the modular RCTM of the invention is not limited to being employed upon discrete memory modules coupled to a system bus. For example, in some systems it may be desirable to provide one unitary substrate having all of the system components physically mounted thereon. In such a system one or more memory units would be attached to the substrate along with a data processor, a system bus, VMC and other components. Each memory unit may then be associated with one of the modular RCTMs. In such a unitary system it may not be a requirement that the RCTMs be physically adjacent the memory units but may instead be physically separated therefrom. However, the RCTMs would be coupled to the appropriate signal lines for recording the reference and change status of an associated memory unit, such as a four megabyte unit.

The memory module shown in Fig. 2a is capable of storing in excess of four megabytes of data, or one megaword, each word being comprised of 32 bits of data. It can be appreciated that two such modules may be operated in parallel to store words having 64 bits of data, four modules may store words having 128 bits of data, etc.

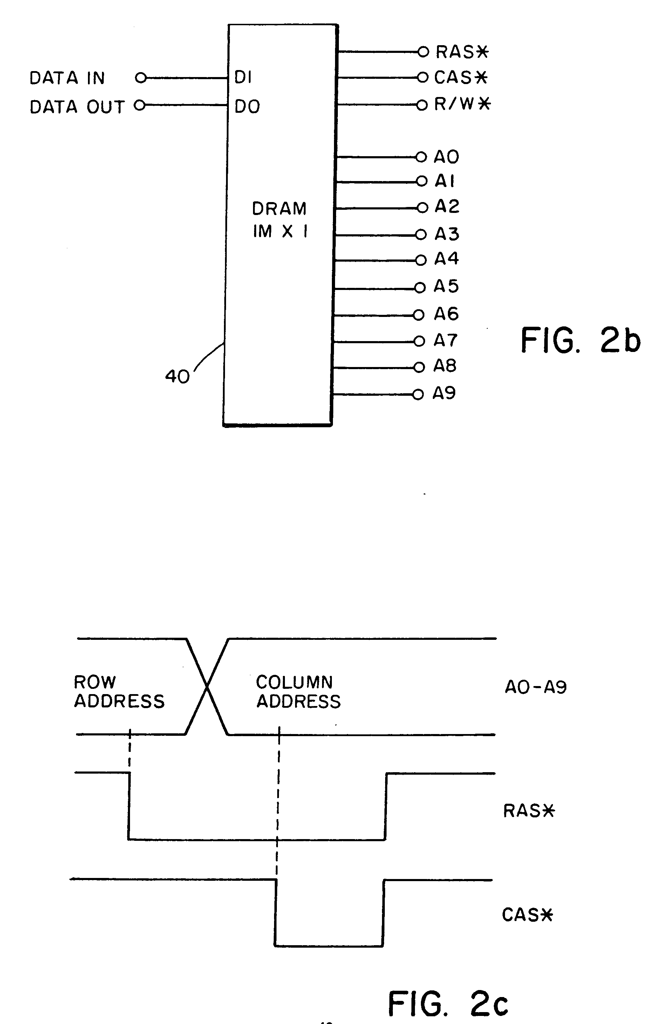

Referring now to Figs. 2b and 2c there is shown a well known DRAM having a Data In and a Data Out signal line and a plurality of address lines A0 through A9. The DRAM 40 also has a RAS*, CAS*, and R/W* signal control line. In order to achieve a large data storage device with a minimum of input signal pins and, hence, a small package size, such DRAMs typically multiplex the address lines such that at one time in the operation of the device the address lines are characterized as row address lines under the control of RAS* and at another time in the cycle are characterized as column address lines under the control of CAS*. The device shown in Fig. 2b has ten address signal pins and, thus, has a total of 20 address inputs which yield a device having a total 1,048,567 bit storage locations. Of course, other DRAMs may have more or lesss than ten address inputs such as 64k and 256k bit devices and other devices may store more than one bit of data, such as devices adapted to simultaneously store and retrieve four bits of data.

As shown in Fig. 2c one conventional addressing mode for such a DRAM results in Ras* being asserted for latching within the RAM the row address lines appearing on A0-A9. Subsequent to the assertion of Ras* the state of the address lines A0-A9 are switched to the desired column address and Cas* is asserted. The assertion of Cas* also typically either stores within the device or reads from the device, depending upon the state of R/W*, a bit of data at the specified row and column address.

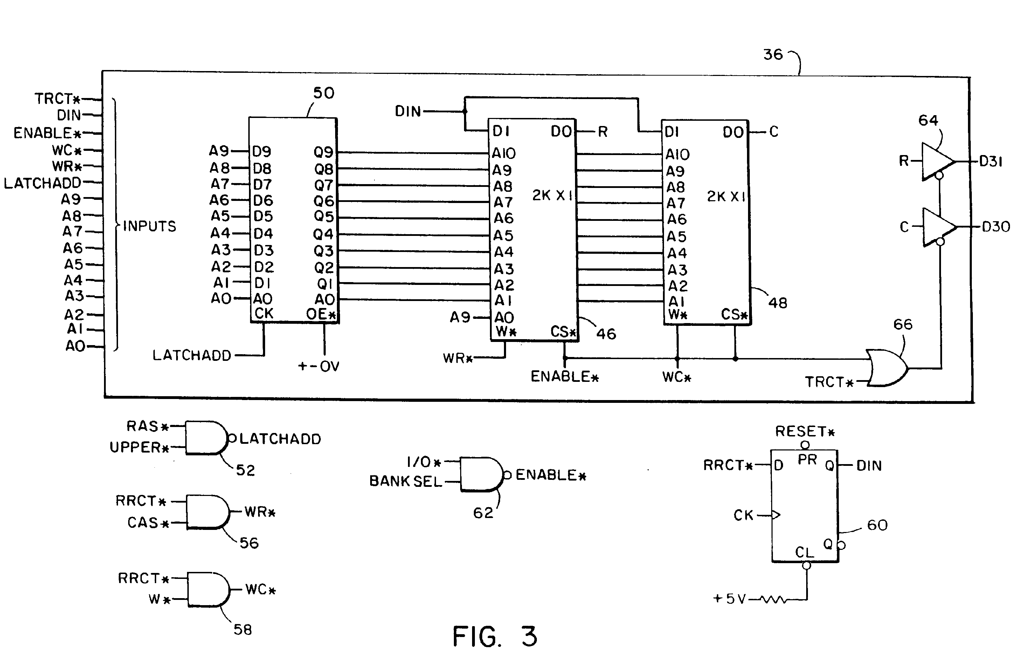

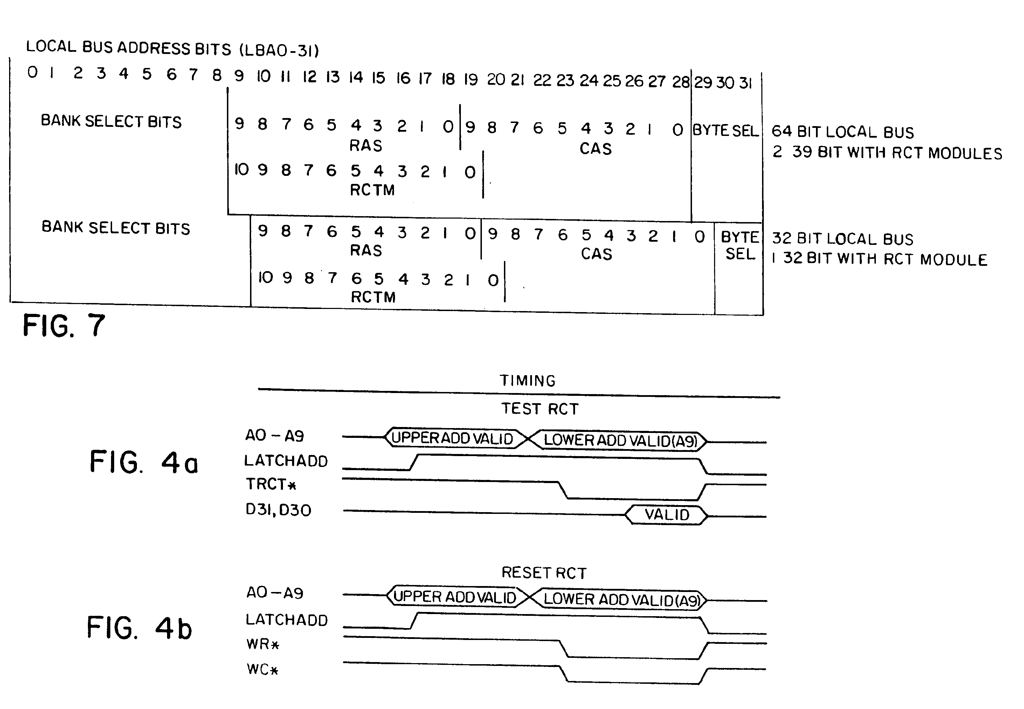

Referring now to Fig. 3, in conjunction with Figs. 4a and 4b, there is shown an illustrative schematic diagram of the RCTM 36 of Fig. 2a and timing diagrams which illustrate the operation of the RCTM. RCTM 36 can be seen to comprise a first memory device 46 and a second memory device 48. Memory devices 46 and 48 each have, in this embodiment of the invention, a storage capacity of 2048 bits of data. The 2048 bit storage capacity of each of the memory devices 46 and 48 corresponds to 2048 blocks, or page frames, of physical memory; that is 2048 page frames each comprising 512 32 bit words of data. Memory device 46 is configured such that an access by CPU 12 to the memory devices 40 on the memory module 24 results in a corresponding bit being set to a logic one condition. Memory device 48 is configured such that a write access to a memory device upon the memory module also results in a corresponding bit being set to a logic one. Thus, it can be seen that memory device 46 records the occurrence of a reference to a particular page of data while memory device 48 further records the occurrence of a write, or change, of a particular page of data.

In order to accomplish these functions memory devices 46 and 48 have 11 address inputs (A0-A10). A1-A10 are coupled to the output of a ten bit latch 50 which latches the state of the A0-A9 address bits from the address bus 20. This latching function may be accomplished by the falling edge of the memory row address strobe (RAS*). The falling edge of RAS* occurs during the strobing of the row address into the memory devices 40 of Fig. 2a. RAS* is applied to a clock input of latch 50 via NAND gate 52. A second input to NAND gate 52 is a normally high signal UPPER*, the operation of which will be described hereinafter. The eleventh address input to memory devices 46 and 48 is subsequently applied after the falling edge of RAS*, being the A9 address signla, which is typically applied during the column address strobe (CAS*) portion of the memory 40 access cycle. Thus, it can be seen that the address appearing on the 11 address inputs to memory devices 46 and 48 defines one page of 2048 pages of physical memory installed upon the module, the address inputs being decoded by an address decoding means which comprises at least circuitry within the memory devices 46 and 48.

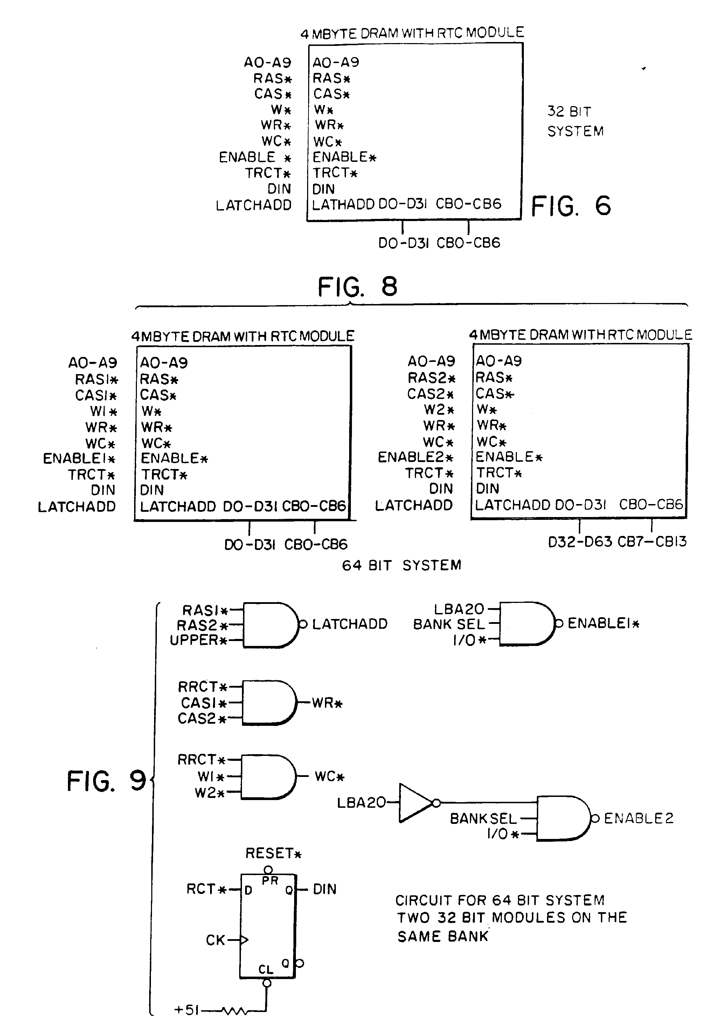

It should be noted that the presently preferred embodiment of a memory module described herein comprises, as illustrated in Fig. 6, 1,048,567 data words each comprising 32 bits of data, for a memory module storage capacity of more than four million bytes of data. In other embodiments of the invention the memory module may comprise more or less than this number of data storage locations. The memory devices 46 and 48 in these other, unillustrated, embodiments will correspondingly have fewer or more storage locations. Also, if a page frame of data is defined to be other than 512 data words, such as 256 or 1024 data words, the storage capacity of each of the memory devices 46 and 48 may also differ from that shown herein. It should also be noted that the presently preferred embodiment of the invention is shown to utilize dynamic random access memory, such memories typically requiring the RAS* and CAS* timing signals. However, in other unillustrated embodiments of the invention the memory devices 40 may be static type memory devices which do not require RAS* and CAS* timing signals. In general, any type of memory device, such as bubble memory, may be utilized upon a memory module 24 or 26.

Coupled to a write input (W*) of memory device 46 is an AND gate 56 having as inputs the CAS* memory timing signal and a reset reference and change table (RRCT*) signal, the operation of which will be described hereinafter. At the completion of the CAS* portion of the memory cycle the logic state appearing at the data input (DI) of memory device 46 will be stored within the location addressed by the state of address line A0-A10. The DI input of memory device 46 is coupled to the output of a flip/flop (FF) 60 which has a Reset Reference and Change Table (RRCT*) signal coupled to the clock input. During normal memory accesses RRCT* is a logic one; making DIN normally a logic one. Thus, a logic one is stored within the memory device 46 at a location corresponding to the page frame addressed by CPU 12. The storage of such a logic one signal is indicative of a reference to a particular page frame by the CPU 12.

Memory device 48 is similarly coupled to the address signals and the output of FF 60 and, further, has an AND gate 58 coupled to the W* thereof, the AND gate 58 having as inputs the memory write (W*) timing signal and the RRCT* timing signal. the state of the W* timing signal is indicative of a CPU 12 write access to the memories 40 of memory module 24. The assertion of W* stores a logic one in the memory location addressed by address inputs A0-A10 of memory device 48. This is indicative of a change to the corresponding page frame of physical memory. During a CPU 12 read access the W* signal line is not asserted. Thus, only the corresponding bit in memory device 46 is set. Only during a CPU 12 write access to a particular page of physical memory are both the reference and change bits set in devices 46 and 48, respectively.

Memory devices 46 and 48 each have a chip select input (CS*) which is normally required to be at a logic low state in order to read or write data within the memory device. The CS* signals of memory devices 46 and 48 are coupled, via NAND gate 62, to an active low signal I/O*, which is normally at a logic zero state and to a nactive high bank select (BANK SEL) signal. During a CPU 12 access to the memories 40 memory devices 46 and 48 are enabled for accesses by the I/O* being deasserted, or high, and BANK SEL being asserted drives the output of NAND gate 62 low, thereby selecting both memory devices 46 and 48.

As can be seen in Fig. 7 a 32 bit local address bus has, for a 32 bit data bus embodiment, ten MSB bits as bank select addresses. A 64 bit data bus system has nine MSB address bus bits as bank selcet addresses. It can be appreciated that a 32 data bit system comprises gour bytes of data per word while a 64 data bit system comprises eight bytes of data per word. Byte selection is accomplished by decoding either two or three LSB address bits. Such bank and byte select decoding is typically accomplished by address decoding means within the MCU 25.

The I/0* signal is provided to prevent the operation of memory devices 46 and 48 during and I/O type of memory 40 access, such as when the I/0 controller 28 is storing or retrieving data within the memories 40.

It can be appreciated that in order to be useful the information stored within memory devices 46 and 48 must be operable for at least being read and possibly modified by a physical memory controlling device, such as a software routine executed by the CPU 12 which manages the physical memory. For example, it may be desirable after a predetermined interval of time to examine the memory device 46 to determine which pages of memory have been accessed by CPU 12 and which pages have not been accessed. If, after a given interval of time, one or more pages of data have not been accessed by CPU 12 the continued residency of these pages of data within the physical memory may be unnecessary. Thus, it may be desirable in some situations to remove an unreferenced page of data from memory and to store in its place another page of data, such as a page of memory which is currently being requested by the CPU 12. It may also be desirable at this time to determine if the page of data has been changed by the CPU 12 during a memory write cycle. If it is determined that a page of data which is to be removed from the physical memory has been changed it may further be desirable to store the changed data on the mass storage device 32. If the page of data has not been changed, whether it has been referenced or not, the restorage of the data is usually unnecessary. That is, new data may be writeen over the current data within the page without having to first store the currently resident data within mass storage 32, it being assumed that a copy of the page exists within the mass storage device 32.

In order to accomplish these desirable functions the RCTM 36 is operable for having individual bits of the memory devices 46 and 48 selectively reset to a logic zero condition. This is accomplished by asserting the reset reference and change table (RRCT*) signal in conjunction with the desired address of the page within the memory devices 46 and 48. As can be seen in Fig. 3 and 4b, when RRCT* is low, or asserted, the data input (DIN) to each of the memory devices 46 and 48 is at a logic zero condition via F/F 60. The assertion of RRCT*, being coupled through AND gates 56 and 58 to the write inputs of memory devices 46 and 48, respectively, causes a logic zero to be written into the addressed memory location. The address inputs A0-A9 are first set up as previously described, the address bits being latched into latch 50 by the assertion of signal UPPER*. The resetting of bits within memory devices 46 and 48 is accomplished, for example, when a new block of data is stored within the physical memory.

In order to read the reference and change table data the RCTM 36 is provided with a test reference and change table (TRCT*) signal.

Data read out of memory devices 46 and 48, as determined by address inputs A0-A10, is provided to a buffer 64 which has as inputs the signals R (reference) and C (change) which are supplied from the data out (DO) outputs of memory devices 46 and 48, respectively. The TRCT* signal is provided, via OR gate 66, to an output enable (OE*) input of buffer 64 to cause the buffer 64 to place the logic states of R and C on a pair of outputs coupled to the most significant bit (MSB) and the second most signficant bit (MSB-1) of the data bus. Thus, the CPU 12 is enabled to read the addressed location within memory devices 46 and 48 to determine the reference and change status of the corresponding page of physical memory. Preferably, these accesses to RCTM 36, as defined by TRCT* and RRCT*, are not memory-type accesses to prevent the storage of refernce and change bits within memory devices 46 and 48.

Based upon the foregoing description it can be appreciated that the use of the invention provides several valuable advantages in a virtual memory data processing system. For example, the reference and change table is not centralized nor need it be physically adjacent the CPU 12 or the VMC 14. Instead, the RCT is distributed throughout the physical memory space of the data processing system 10. Thus, additional memory modules may be attached to the system, each of the memory modules having an internal, modular RCTM for recording the reference and change activity upon that particular memory module. The data processing system may have its physical memory capacity expanded without exceeding the storage capability of any one particular RCTM. Also, the virtual memory data processing system 10 is not burdened with excess cost and complexity by having a unitary reference and change table which has a predetermined storage capacity which far exceeds the actual physical memory storage capacity of the system.

In summary, the virtual memory data processing system 10 is provided with a flexible and expandable reference and chang table which is expanded as physical memory capacity is attached to the system, thereby providing for a reduction in system cost and the readily accomplished memory expansion of the system. Such a readily accomplished memory expansion is especially advantageous for those systems which have their physical memory capacity increased at a time subsequent to the initial installation of the system. In other words, the system reference and change table is automatically expanded during the installation of one or more additional memory modules.

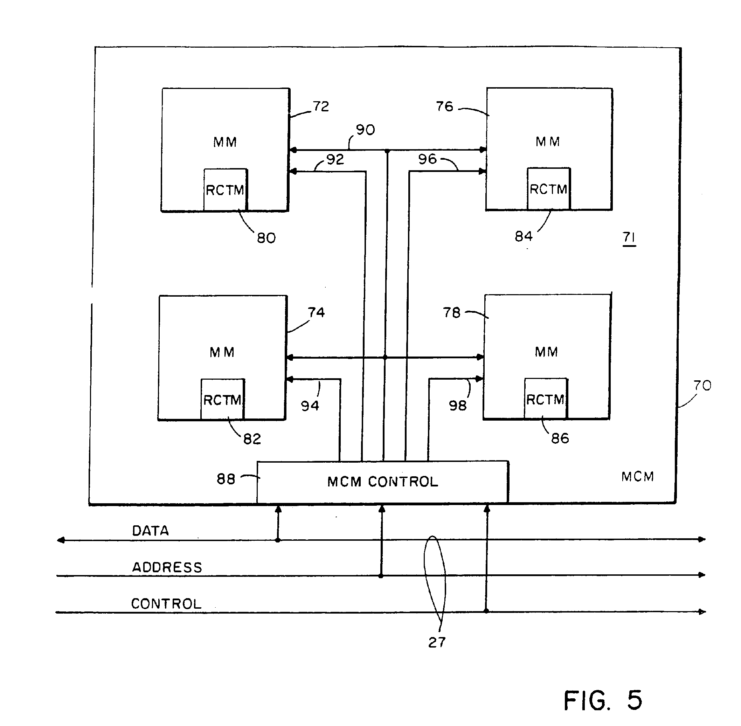

Referring to Fig. 5 there is shown a memory carrier module (MCM) 70 which, in accordance with the invention, comprises a substrate, such as a printed circuit board, having a plurality of memory moudles (MM) 72-78 disposed upon a surface 71 thereof. Each of the MMs 72-78 may be identical in construction to the memory module 24 of Fig. 2a, that is, each of the MM 72-78 comprises an integral reference and change table module (RCTM) 80-86, respectively. Each of the RCTMs 80-86 may be identical in construction to the RCTM 36 of Fig. 3. It should be realized that more or less than the four MMs shown may be provided on the MCM and that less than the possible maximum number may be installed at any given time. MCM 70 may comprise logic means, such as a memory carrier module control (MCM COMTROL) 88, which is operable for interfacing with the memory bus 27. In operation, MCM CONTROL 88 decodes the address and control buses to select a particular MM 72-78 for read or write access by the CPU 12 or I/O control 28. MCM CONTROL 88 may also be operable for generating the multiplexed row and column address signals on A0-A9, the RAS* and CAS* signals, and the logic signals associated with the RCTMs 80-86, such as RRCT*, TRCT* and UPPER. It can be appreciated that MCM CONTROL 88 may comprise a well-known DRAM controller type of device and other circuits, such as address decoders, and row and column address multiplexers. Of course, these MCM control functions may also be accomplished by the MCU control functions may also be accomplished by the MCU 25 of Fig. 1, either operating alone or in conjunction with MCM control 88.

In order to activate only one of the MMs 72-78 MCM CONTROL 88 may have a number of CAS* outputs equal to the numbers of MMs installed, only one of the CAS* outputs being asserted for any given CPU 12 or I/O access. Similarly, the MCM CONTROL 88 may have a plurality of RRCT* and TRCT* outputs for individually activating the RCTMs 80-86.

That is, MCM CONTROL 88 may be operable for generating a common MM signal group 90 which includes those logic signals, such as A0-A9, UPPER, and RAS* which are provided in common to each of the MMs. MCM CONTROL 88 may further be operable for generating a plurality of MM specific signal groups 92-96, coupled to MMs 72-76, respectively. Each specific signal group is comprised of signals operable for activating only a selected MM, such as CAS*, W*, RRCT*, I/0 and TRCT*.

For the illustrative MCM 70 of Fig. 5 the total storage capacity of the MCM 70 may vary from four megabytes to 16 megabytes of data, depending on the number of MMs installed. The total RCTM storage capacity therefore is similarly variable between 2048 and 8192 two bit words of data, corresponding to the total number of physical page frames represented by the installed memory capacity of MCM 70.

The invention has been generally described thus far in the context of a system having a 32 bit data word. It should be realized however that the RCTM of the invention is not limited to use with 32 bit systems. Each memory module 72-78 may be comprised of 16 memory devices and a corresponding fewer number of error detection and correction memory devices coupled to a 16 bit data bus. In some systems however it may be desirable to employ an expanded data path, such as a data path comprised of 64 or 128 bits. A 64 bit system is illustrated in Fig. 8. Logic operable for generating certain of the RCTM input signal is shown schematically in Fig. 9.

For example, in such an expanded system the data bus may comprise data signal lines D00-D63 coupled to the MCM 70. The 32 bit MMs 72 and 74 may then each store one half of the 64 bit data word. For example, the lower 32 bits may be stored in MM 72 and the upper 32 bits in MM 74. In such a system MCM CONTROL 88 may comprise additional circuitry for bank selecting either or both of the MMs 72 and 74 depending upon the type of CPU access. A long word (64 bit) access would result in the selection of bothe MM 72 and 74 while a word access (32 bits) would select only one of the MMs 72 or 74.

The bank selection would not only enable the memory devices upon the selected MM but would also enable the associated RCTM. In accordance with the invention, the decoder higher order address signal line modifies the state of an MM specific signal, such as ENABLE*. For example, the I/0* signal line may be combined with a BANK SEL signal as illustrated in Fig. 3. Thus, the modular RCTM of the invention may be readily employed in a number of different types of data processing systems having varying data word widths and/or depth.

As has been previously stated, a presently preferred embodiment of the invention has been disclosed herein. It is anticipated that those having skill in this art may envision modifications to this disclosed presently preferred embodiment. For example, although the RCTM is shown to comprise two separate memory devices 46 and 48, it is within the scope of the invention to provide one memory device having a storage capacity of two or more bits per address location.

## Claims

1. A virtual memory data processing system comprising bus means (16, 27) having signal lines for transferring at least physical addresses, data, and operation specifiers, a physical address source (12) coupled to the bus means for translating virtual addresses into physical addresses and providing the physical addresses and operation specifiers including data access specifiers to the bus means, and memory means partitioned into memory units (24, 26) connected to the bus means (27) for storing data words and responding to one of the physical addresses specifying one of the data words and one of the data access specifiers received on the bus means by performing the data access specified by the data operation specifier on the data word specified by the physical address, the memory system being organized into a plurality of blocks each containing the data words,
**characterized** in that:
the virtual memory data processing system includes in association with each memory unit a reference and change table means RCTM (36) which contains a record corresponding to each of the blocks associated with the memory unit, the reference and change table means being responsive to the physical address and to the data access specifier for setting the record which corresponds to the block containing the data word to indicate the occurrence of an access to a data word in that block; the operation specifiers provided by the physical address source include a test reference and change table operation specifier TRCT in order to read the RCTM (36); and
the reference and change table means is further responsive to the physical address and to the test reference and change table operation specifier to output to the data signal lines of the bus means the contents of the record corresponding to the block that is specified by the physical address.

2. The virtual memory data processing system set forth in claim 1 and being further **characterized** in that:
the data access specifiers include data modification operation specifiers specifying modification of the stored data and the reference and change table means further responds to the physical address and to one of the data modification operation specifiers by setting the record which corresponds to the block containing the data word specified by the physical address to indicate the occurrence of a data modification operation on a data word in that block.

3. The virtual memory data processing system set forth in claim 1 and being further **characterized** in that:
the operation specifiers provided by the physical address source further include a reset reference and change table operation specifier (TRCT) and
the reference and change table means is further responsive to the physical address and to the reset reference and change table operation specifier to reset the record corresponding to the block containing the data word specified by the physical address.

4. The virtual memory data processing system set forth in claim and being further **characterized** in that:
the memory means includes storage means (26) responsive to internal addresses and internal control signals for storing the words and memory control means (25) coupled between the bus, the reference and change table means and the storage means, the memory control means responding to a physical address by converting the physical address to a corresponding internal address specifying a block and a word with the block and to a data access specifier by activating a memory access internal control signal specifying a memory access and
the reference and change table means includes a first reference and change table storage device (46) coupled to the memory control means by internal address lines carrying the internal address specifying the block, the reference and change table storage device serving to store the records in blocks specified in the internal addresses and further including a data input and a data write signal input;
value providing means (60) coupled to the data input means for providing a value indicating a memory access; and
first write signal providing means (56) coupled between the memory control means and the write signal input for providing the write signal to the write signal input in response to the memory access internal control signal;
the first reference and change table means operating in response to the internal address specifying a given block and the memory access internal control signal to store the value indicating the memory access in the record in the first reference and change table storage device which corresponds to the block containing the data word being accessed.

5. The virtual memory data processing system set forth in claim 4 and being further **characterized** in that:
the data access specifiers include data modification operation specifiers specifying modification of the stored data;
the memory control means further responds to a data modification operation specifier by activating a memory write internal control signal specifying a memory write operation;
the reference and change table means further includes a second reference and change table storage device (48) coupled to the memory control means by internal address lines carrying the internal address specifying the block, the second reference and change table storage device serving to store the records indicating occurrences of data modifications at the locations in the storage device specified by the addresses on the internal address lines and further including a data input coupled to the value providing means and a data write signal input; and
second write signal providing means (58) coupled between the memory control means and the write signal input of the second reference and change table storage device for providing the write signal to the write signal input in response to the memory write internal control signal,
the second reference and change table means operating in response to the internal address specifying a given block and the memory write internal control signal to store the value indicating the data modification in the record in the second reference and change table storage device which corresponds to the block containing the data word being modified.

6. The virtual memory data processing system set forth in claim 5 and being further **characterized** in that:
the data processing system further includes an additional physical address source (34) coupled to the bus which provides additional physical addresses which are not translated from virtual addresses; the operation specifiers further include an additional source data operation specifier; the memory control means responds to the additional source data operation specifier by producing a signal
indicating that the Source of the address was the additional physical address source; and
the first and second reference and change table storage means each further include an enable input for receiving an enable signal enabling each of the first and second reference and change table means to respond to the addresses on the internal address lines; and
the reference and change table means further includes means (62) coupled between the memory control unit and the enable inputs for disabling the first and second reference and change table means in response to the signal indicating that the source of the address was the additional physical address source,
whereby the memory reference and change table means does not indicate the occurrence of accesses to or modifications of data made by the additional physical address source.

7. The virtual memory data processing system set forth in claim 4 and being further **characterized** in that:
the operation specifiers produced by the physical address source further include a reset reference and change table operation specifier;
the memory control unit further responds to the reset reference and change table operation specifier by producing a reset reference and change table internal control signal;
the reference and change table means further includes reset reference and change table signal providing means (56) coupled between the memory control means and the write signal input for providing the write signal to the write signal input in response to the reset reference and change table internal control signal; and the value providing means further responds to the reset reference and change table signal by providing a value indicating no memory access;
the first reference and change table means operating in response to the internal address specifying a given block and the reset reference and change table internal control signal to store the value indicating no memory access in the record in the reference and change table storage device which corresponds to the block containing the data word specified by the physical address.

8. The virtual memory data processing system set forth in claim 4 and being further **characterized** in that:
the bus means further includes data lines; the operation specifiers produced by the physical address source further include a test reference and change table operation specifier;
the memory control unit further includes internal data lines (D30, D1) coupled to the data lines and responds to the reset reference and change table operation specifier by producing a test reference and change table internal control signal; the first reference and change table storage means further includes a data output for outputting the value of a record corresponding to a block in response to the internal address specifying the block; and
the memory reference and change table means further includes record output means (64,66) coupled between the data output and
the internal data lines and responsive to the test reference and change table internal control signal to enable output of the value of the record to the internal data lines;
the first reference and change table means operating in response to the internal address specifying a given block and the test reference and change table internal control signal to output the value of the record which corresponds to the given block to the internal data lines.

## Patentansprüche

1. Mit einem virtuellen Speicher ausgestattetes Datenverarbeitungs-System, umfassend eine Buseinrichtung (16, 27) mit Signalleitungen zum Übertragen wenigstens von realen Adressen, Daten und Operationsspezifizierern, eine mit der Buseinrichtung verbundene Quelle realer Adressen (12) zum Umwandeln virtueller Adressen in reale Adressen und zum Bereitstellen der realen Adressen und Operationsspezifizierern, einschließlich Datenzugriffsspezifizierern, an die Buseinrichtung, und eine Speichereinrichtung, die in mit der Buseinrichtung (27) verbundene Speichereinheiten (24, 26) unterteilt ist, zum Speichern von Datenwörtern verbunden ist und zum Ansprechen auf eine der realen Adressen, die eines der Datenwörter und einen der Datenzugriffsspezifizierer, die an der Buseinrichtung empfangen wurden, spezifiziert, durch Ausführen des Datenzugriffs, der vom Datenoperationsspezifizierer auf dem von der realen Adresse spezifizierten Datenwort vorgeschrieben ist, wobei das Speichersystem nach einer Vielzahl von Blöcken organisiert ist, die je die Datenwörter enthalten,
dadurch **gekennzeichnet**, daß
- das mit einem virtuellen Speicher ausgestattete Datenverarbeitungs-System in Verbindung mit jeder Speichereinheit eine Referenz- und Änderungstabellen-Einrichtung RCTM (36) aufweist, die einen Satz enthält, der jedem der der Speichereinheit zugeordneten Blöcke entspricht, wobei die Referenz- und Änderungstabellen-Einrichtung auf die reale Adresse und auf den Datenzugriffsspezifizierer anspricht, um den Satz zu setzen, der dem das Datenwort enthaltenden Block entspricht, derart, daß das Vorliegen eines Zugriffs auf ein Datenwort in diesem Block angezeigt wird,
- die von der Quelle realer Adressen bereitgestellten Operationsspezifizierer einen Test-Referenz- und Änderungstabellen-Operationsspezifizierer TRCT enthalten, um den RCTM (36) zu lesen, und
- die Referenz- und Änderungstabellen-Einrichtung ferner auf die reale Adresse und auf den Test-Referenz- und Änderungstabellen-Operationsspezifizierer anspricht, um auf die Datensignalleitungen der Buseinrichtung die Inhalte des Satzes auszugeben, der dem Block entspricht, der durch die reale Adresse spezifiziert ist.

2. Mit einem virtuellen Speicher ausgestattetes Datenverarbeitungs-System nach Anspruch 1,
und ferner dadurch **gekennzeichnet**, daß
- die Datenzugriffsspezifizierer Datenänderungs-Operationsspezifizierer aufweisen, welche eine Änderung der gespeicherten Daten spezifizieren, und
- die Referenz- und Änderungstabellen-Einrichtung ferner auf die reale Adresse und auf einen der Datenänderungs-Operationsspezifizierer durch Aufrufen des Satzes anspricht, der dem das Datenwort enthaltenden, durch die reale Adresse spezifizierten Block entspricht, derart, daß das Vorliegen einer Datenänderungsoperation an einem Datenwort in diesem Block angezeigt wird.

3. Mit einem virtuellen Speicher ausgestattetes Datenverarbeitungs-System nach Anspruch 1,
und ferner dadurch **gekennzeichnet**, daß
- die von der Quelle realer Adressen bereitgestellten Operationsspezifizierer ferner einen Rücksetz-Referenz- und Änderungstabellen-Operationsspezifizierer ((RRCT) enthalten, und
- die Referenz- und Änderungstabellen-Einrichtung ferner auf die reale Adresse und auf den Rücksetz-Referenz- und Änderungstabellen-Operationsspezifizierer anspricht, derart, daß der Satz rückgesetzt wird, der dem das Datenwort enthaltenden, durch die reale Adresse spezifizierten Block entspricht.

4. Mit einem virtuellen Speicher ausgestattetes Datenverarbeitungs-System nach Anspruch 1,
und ferner dadurch **gekennzeichnet**, daß
- die Speichereinrichtung ein Speichermodul (26) aufweist, die zum Speichern der Wörter auf interne Adressen und interne Steuersignale anspricht, und eine zwischen den Bus, die Referenz- und Änderungstabellen-Einrichtung und das Speichermodul zwischengeschaltete Speichersteuereinrichtung (25), die auf eine reale Adresse durch Umwandeln der realen Adresse in eine entsprechende interne Adresse, die einen Block und ein Wort im Block spezifiziert, und auf einen Datenzugriffsspezifizierer durch Aktivieren eines einen Speicherzugriff spezifizierenden internen Speicherzugriff-Steuersignals anspricht, und
- die Referenz- und Änderungstabellen-Einrichtung umfaßt
- ein erstes Referenz- und Änderungstabellen-Speichermodul (46) aufweist, das mit der Speichersteuereinrichtung durch interne Adressenleitungen verbunden ist, welche die den Block spezifizierende interne Adresse übertragen, wobei das Referenz- und Änderungstabellen-Speichermodul dazu dient, die Sätze in durch die internen Adressen spezifizierten Blöcken zu speichern, und ferner einen Dateneingang und einen Datenschreibsignaleingang aufweist,
- eine Werte bereitstellende Einrichtung (60), die mit der Dateneingangs-Einrichtung verbunden ist, um einen einen Speicherzugriff anzeigenden Wert bereitzustellen, und
- eine erste Schreibsignale bereitstellende Einrichtung (56), die zwischen die Speichersteuereinrichtung und den Schreibsignaleingang zwischengeschaltet ist, um in Abhängigkeit vom internen Speicherzugriff-Steuersignal das Schreibsignal an den Schreibsignaleingang anzulegen,
wobei die erste Referenz- und Änderungstabellen-Einrichtung in Abhängigkeit von der einen bestimmten Block spezifizierenden internen Adresse und vom internen Speicherzugriff-Steuersignal arbeitet, derart, daß der den Speicherzugriff anzeigende Wert in den Satz im ersten Referenz- und Änderungstabellen-Speichermodul gespeichert wird, der dem Block entspricht, welcher das Datenwort, auf das zugegriffen wird, enthält.

5. Mit einem virtuellen Speicher ausgestattetes Datenverarbeitungs-System nach Anspruch 4
und ferner dadurch **gekennzeichnet**, daß
- die Datenzugriffsspezifizierer Datenänderungs-Operationsspezifizierer umfassen, welche eine Änderung der gespeicherten Daten spezifizieren,
- die Speichersteuereinrichtung ferner auf einen Datenänderungs-Operationsspezifizierer durch Aktivieren eines internen Speicherschreib-Steuersignal anspricht, welches eine Speicherschreiboperation spezifiziert,
- die Referenz- und Änderungstabellen-Einrichtung ferner umfaßt
- ein zweites Referenz- und Änderungstabellen-Speichermodul (48), das mit der Speichersteuereinrichtung durch interne Adressenleitungen verbunden ist, welche die den Block spezifizierende interne Adresse übertragen, wobei das zweite Referenz- und Änderungstabellen-Speichermodul dazu dient, die Sätze zu speichern, welche das Vorliegen von Datenänderungen an den Speicherstellen im Speichermodul anzeigen, welche durch die Adressen auf den internen Adressenleitungen spezifiziert sind, und ferner einen mit der Werte bereitstellenden Einrichtung verbundenen Dateneingang und einen Datenschreib-Signaleingang aufweist, und
- eine zweite Schreibsignale bereitstellende Einrichtung (58), die zwischen die Speichersteuereinrichtung und den Schreibsignaleingang des zweiten Referenz- und Änderungstabellen-Speichermoduls zwischengeschaltet ist, um in Abhängigkeit vom internen Speicherschreib-Steuersignal das Schreibsignal an den Schreibsignaleingang anzulegen,
wobei die zweite Referenz- und Änderungstabellen-Einrichtung in Abhängigkeit von der internen Adresse, die einen bestimmten Block spezifiziert, und vom internen Speicherschreib-Steuersignal arbeitet, derart, daß der die Datenänderung anzeigende Wert in den Satz im zweiten Referenz- und Änderungstabellen-Speichermodul gespeichert wird, der dem Block entspricht, welcher das Datenwort, das geändert wird, enthält.

6. Mit einem virtuellen Speicher ausgestattetes Datenverarbeitungs-System nach Anspruch 5
und ferner dadurch **gekennzeichnet**, daß das Datenverarbeitungs-System ferner umfaßt:
- eine mit dem Bus verbundene Quelle zusätzlicher realer Adressen (34), die zusätzliche reale Adressen bereitstellt, die keine umgewandelten virtuellen Adressen sind,
- die Operationsspezifizierer ferner einen sich auf die zusätzliche Quelle beziehenden Datenoperationsspezifizierer umfassen,
- die Speichersteuerung auf den sich auf die zusätzliche Quelle beziehenden Datenoperationsspezifizierer durch Erzeugen eines Signals anspricht, das anzeigt, daß die Quelle der Adresse die Quelle zusätzlicher realer Adressen war, und
- das erste und das zweite Referenz- und Änderungstabellen-Speichermodul je ferner einen Freigabeeingang zum Empfangen eines Freigabesignals aufweisen, das jede der ersten und zweiten Referenz- und Änderungstabellen-Einrichtungen freigibt, derart, daß auf die Adressen auf den internen Adressenleitungen angesprochen wird, und
- die Referenz- und Änderungstabellen-Einrichtung ferner eine Einrichtung (62) aufweist, die zwischen die Speichersteuereinheit und die Freigabeeingänge zwischengeschaltet ist, um die erste und die zweite Referenz- und Änderungstabellen-Einrichtung in Abhängigkeit von dem Signal zu deaktivieren, das anzeigt, daß die Quelle der Adresse die Quelle zusätzlicher realer Adressen war,
wodurch die Speicher-Referenz- und Änderungstabellen-Einrichtung RCTM das Vorliegen von Zugriffen auf oder Änderungen an Daten durch die Quelle zusätzlicher realer Adressen nicht anzeigt.

7. Mit einem virtuellen Speicher ausgestattetes Datenverarbeitungs-System nach Anspruch 4
und ferner dadurch **gekennzeichnet**, daß
- die von der Quelle realer Adressen erzeugten Operationsspezifizierer ferner einen Rücksetz-Referenz- und Änderungstabellen-Operationsspezifizierer aufweisen,
- die Speichersteuereinheit ferner auf den Rücksetz-Referenz- und Änderungstabellen-Operationsspezifizierer durch Erzeugen eines internen Referenz- und Änderungstabellen-Rücksetzsteuersignals anspricht,
- die Referenz- und Änderungstabellen-Einrichtung ferner eine Einrichtung (56) zum Bereitstellen eines Referenz- und Änderungstabellen-Rücksetzsignals umfaßt, die zwischen die Speichersteuereinrichtung und den Schreibsignaleingang zwischengeschaltet ist, um in Abhängigkeit vom internen Referenz- und Änderungstabellen-Rücksetzsteuersignal das Schreibsignal an den Schreibsignaleingang anzulegen, und
- die Werte bereitstellende Einrichtung ferner auf das Referenz- und Änderungstabellen-Rücksetzsignal durch Bereitstellen eines "kein Speicherzugriff" anzeigenden Wertes anspricht,
wobei die erste Referenz- und Änderungstabellen-Einrichtung in Abhängigkeit von der einen bestimmten Block spezifizierenden internen Adresse und vom internen Referenz- und Änderungstabellen-Rücksetzsteuersignal arbeitet, derart, daß der "kein Speicherzugriff" anzeigende Wert in den Satz im Referenz- und Änderungstabellen-Speichermodul gespeichert wird, der dem das Datenwort enthaltenden, durch die reale Adresse spezifizierten Block entspricht.

8. Mit einem virtuellen Speicher ausgestattetes Datenverarbeitungs-System nach Anspruch 4
und ferner dadurch **gekennzeichnet**, daß
- die Buseinrichtung ferner Datenleitungen aufweist,
- die von der Quelle realer Adressen erzeugten Operationsspezifizierer einen Test-Referenz- und Änderungstabellen-Operationsspezifizierer umfassen,
- die Speichersteuereinheit ferner mit den Datenleitungen verbundene interne Datenleitungen (D30, D1) umfaßt und auf den Rücksetz-Referenz- und Änderungstabellen-Operationsspezifizierer durch Erzeugen eines internen Referenz- und Änderungstabellen-Teststeuersignals anspricht,
- das erste Referenz- und Änderungstabellen-Speichermodul ferner einen Datenausgang zum Ausgeben des Wertes eines einem Block entsprechenden Satzes in Abhängigkeit von der den Block spezifizierenden internen Adresse aufweist, und
- die Speicher-Referenz- und Änderungstabellen-Einrichtung ferner eine Satzausgabeeinrichtung (64, 66) aufweist, die zwischen den Datenausgang und die internen Datenleitungen zwischengeschaltet ist und auf das interne Referenz- und Änderungstabellen-Teststeuersignal anspricht, derart, daß die Ausgabe des Wertes des Satzes auf die internen Datenleitungen freigegeben wird,
wobei die erste Referenz- und Änderungstabellen-Einrichtung in Abhängigkeit von der einen bestimmten Block spezifizierenden internen Adresse und vom internen Referenz- und Änderungstabellen-Teststeuersignal arbeitet, derart, daß der Wert des dem bestimmten Block entsprechenden Satzes auf die internen Datenleitungen ausgegeben wird.

## Revendications

1. Système de traitement de données, équipé d'une mémoire virtuelle, comprenant un moyen de bus (16, 27) disposant de circuits de signal pour transférer au moins des adresses effectives, des données et des spécificateurs d'opération, une source (12) d'adresses effectives, reliée au moyen de bus, destinée à transformer des adresses virtuelles en adresses effectives et à fournir les adresses effectives et les spécificateurs d'opération, y compris des spécificateurs d'accès aux données, au moyen de bus, et un moyen de mémoire subdivisé en des unités de mémoire (24, 26), connectées au moyen de bus (27), destinées à mémoriser des mots de données et à répondre à une des adresses effectives spécifiant un des mots de données et à un des spécificateurs d'accès aux données reçus par le moyen de bus en exécutant l'accès aux données, tel que spécifié par le spécificateur d'opération données, sur le mot de données spécifié par l'adresse effective, le système de mémoire étant organisé dans une multitude de blocs, chacun d'eux contenant les mots de données,
**caractérisé** en ce que
- le système de traitement de données, équipé d'une mémoire virtuelle, comprend, en association avec chaque unité de mémoire, un moyen de table de référence et de changement RCTM (36) qui contient un article correspondant à chacun des blocs associés à l'unité de mémoire, le moyen de table de référence et de changement étant sensible à l'adresse effective et au spécificateur d'accès aux données pour sélectionner l'article qui correspond au bloc contenant le mot de données, de manière à indiquer le fait d'un accès à un mot de données dans ce bloc,
- les spécificateurs d'opération fournis par la source d'adresses effectives comprennent un spécificateur d'opération de contrôle pour la table de référence et de changement TRCT afin de lire le RCTM (36), et
- le moyen de table de référence et de changement est en outre sensible à l'adresse effective et au spécificateur d'opération de contrôle pour la table de référence et de changement, de manière à sortir aux circuits de signal données du moyen de bus les contenus de l'article correspondant au bloc que spécifie l'adresse effective.

2. Système de traitement de données, équipé d'une mémoire virtuelle, selon la revendication 1,
et en outre **caractérisé** en ce que
- les spécificateurs d'accès aux données comprennent des spécificateurs de traitement de modification de données qui spécifient des modifications des données mémorisées, et
- le moyen de table de référence et de changement est en outre sensible à l'adresse effective et à un des spécificateurs de traitement de modification de données en sélectionnant l'article qui correspond au bloc, contenant le mot de données, qui est spécifié par l'adresse effective, de manière à indiquer le fait d'un traitement de modification de données effectué sur un mot de données dans ce bloc.

3. Système de traitement de données, équipé d'une mémoire virtuelle, selon la revendication 1,
et en outre **caractérisé** en ce que
- les spécificateurs d'opération fournis par la source d'adresses effectives comprennent en outre un spécificateur d'opération de restauration pour la table de référence et de changement (RRCT), et
- le moyen de table de référence et de changement est en outre sensible à l'adresse effective et au spécificateur d'opération de restauration pour la table de référence et de changement, de manière à remettre à zéro l'article correspondant au bloc, contenant le mot de données, qui est spécifié par l'adresse effective.

4. Système de traitement de données, équipé d'une mémoire virtuelle, selon la revendication 1
et en outre **caractérisé** en ce que
- le moyen de mémoire comprend un module de stockage (26) sensible à des adresses internes et à des signaux de commande internes, destiné à stocker les mots, et un moyen de commande de mémoire (25), intercalé entre le bus, le moyen de table de référence et de changement et le module de stockage, le moyen de commande de mémoire étant sensible à une adresse effective en convertissant l'adresse effective en une adresse interne correspondante spécifiant un bloc et un mot dans le bloc, et à un spécificateur d'accès aux données en activant un signal de commande interne d'accès à la mémoire spécifiant une adresse de mémoire, et
- le moyen de table de référence et de changement comprend un premier mécanisme de stockage (46) pour la table de référence et de changement, relié au moyen de commande de mémoire par des circuits d'adresses internes acheminant l'adresse interne spécifiant le bloc, le mécanisme de stockage de la table de référence et de changement servant à stocker les articles dans des blocs spécifiés dans les adresses internes, et comprenant en outre une entrée de données et une entrée de signal d'écriture de données,
- un moyen de fourniture de valeurs (60), relié au moyen d'entrée de données, destiné à fournir une valeur indiquant un accès à la mémoire, et
- un premier moyen de fourniture d'un signal d'écriture (56), intercalé entre le moyen de commande de mémoire et l'entrée du signal d'écriture, destiné à appliquer le signal d'écriture à l'entrée de signal d'écriture en réponse au signal de commande interne d'accès à la mémoire,
le premier moyen de table de référence et de changement fonctionnant en réponse à l'adresse interne spécifiant un certain bloc et au signal de commande interne d'accès à la mémoire, de manière à stocker la valeur indiquant l'accès à la mémoire dans l'article introduit dans le premier mécanisme de stockage de la table de référence et de changement et correspondant au bloc qui contient le mot de données, objet de l'accès.

5. Système de traitement de données, équipé d'une mémoire virtuelle, selon la revendication 4,
et en outre **caractérisé** en ce que
- les spécificateurs d'accès aux données comportent des spécificateurs de traitement de modification de données spécifiant une modification des données mémorisées,
- le moyen de commande de mémoire répond en outre à un spécificateur de traitement de modification de données en activant un signal de commande interne d'écriture en mémoire spécifiant une opération d'écriture en mémoire,
- le moyen de table de référence et de changement comprend en outre
- un second mécanisme de stockage (48) de la table de référence et de changement, relié au moyen de commande de mémoire par des circuits d'adresses internes portant l'adresse interne qui spécifie le bloc, le second mécanisme de stockage de la table de référence et de changement servant à stocker les articles indiquant le fait de modifications de données dans les emplacements du mécanisme de stockage que spécifient les adresses sur les circuits d'adresses internes, et comportant en outre une entrée de données reliée au moyen de fourniture de valeurs, et une entrée de signal d'écriture en mémoire, et
- un second moyen (58) de fourniture d'un signal d'écriture, intercalé entre le moyen de commande de mémoire et l'entrée de signal d'écriture du second mécanisme de stockage de la table de référence et de changement, destiné à appliquer le signal d'écriture à l'entrée de signal d'écriture en réponse au signal de commande interne d'écriture en mémoire,
le second moyen de table de référence et de changement fonctionnant en réponse à l'adresse interne qui spécifie un certain bloc et au signal de commande interne d'écriture en mémoire, de manière à stocker la valeur indiquant la modification de donnée dans l'article introduit dans le second mécanisme de stockage de la table de référence et de changement et correspond au bloc qui contient le mot de données en cours de modification.

6. Système de traitement de données, équipé d'une mémoire virtuelle, selon la revendication 5
et en outre **caractérisé** en ce que
- le système de traitement de données comprend en outre une source (34) d'adresses effectives supplémentaires, reliée au bus, qui fournit des adresses effectives supplémentaires qui ne résultent pas de transformations d'adresses virtuelles,
- les spécificateurs d'opération comprennent en outre un spécificateur d'opération données relative à la source supplémentaire,
- le moyen de commande de mémoire répond au spécificateur d'opération données relative à la source supplémentaire en produisant un signal indiquant que la source de l'adresse était la source d'adresses effectives supplémentaires, et
- les premier et second mécanismes de stockage de la table de référence et de changement comportent une entrée de validation destinée à recevoir un signal de validation activant chacun des premier et second moyens de table de référence et de changement, de manière à répondre aux adresses sur les circuits d'adresses internes, et
- le moyen de table de référence et de changement comporte en outre un moyen (62), intercalé entre l'unité de commande de mémoire et les entrées de validation, destiné à désactiver les premier et second moyens de table de référence et de changement en réponse au signal indiquant que la source de l'adresse était la source d'adresses effectives supplémentaires,
par où le moyen RCTM de table de référence et de changement de la mémoire n'indique pas le fait d'un accès aux données ou d'une modification de données effectués par la source d'adresses effectives supplémentaires.

7. Système de traitement de données, équipé d'une mémoire virtuelle, selon la revendication 4
et en outre **caractérisé** en ce que
- les spécificateurs d'opération, produits par la source d'adresses effectives, comportent en outre un spécificateur d'opération de restauration de la table de référence et de changement,
- l'unité de commande de mémoire répond en outre au spécificateur d'opération de restauration de la table de référence et de changement en produisant un signal de commande interne de restauration de la table de référence et de changement,
- le moyen de table de référence et de changement comprend en outre un moyen (56) de fourniture d'un signal de restauration de la table de référence et de changement, intercalé entre le moyen de commande de mémoire et l'entrée de signal d'écriture, destiné à appliquer le signal d'écriture à l'entrée de signal d'écriture en réponse au signal de commande interne de restauration de la table de référence et de changement, et
- le moyen de fourniture de valeurs répond en outre au signal de restauration de la table de référence et de changement en fournissant une valeur indiquant l'absence d'un accès à la mémoire,
- le premier moyen de table de référence et de changement fonctionnant en réponse à l'adresse interne spécifiant un certain bloc et au signal de commande interne de restauration de la table de référence et de changement, de manière à stocker la valeur indiquant l'absence d'un accès à la mémoire dans l'article introduit dans le mécanisme de stockage de la table de référence et de changement et correspondant au bloc, contenant le mot de données, que spécifie l'adresse effective.

8. Système de traitement de données, équipé d'une mémoire virtuelle, selon la revendication 4,
et en outre **caractérisé** en ce que
- le moyen de bus comprend en outre des circuits de données,
- les spécificateurs d'opération produits par la source d'adresses effectives comprennent en outre un spécificateur d'opération de contrôle de la table de référence et de changement,
- l'unité de commande de mémoire comprend en outre des circuits de données internes (D30, D1), reliés aux circuits de données, et répond au spécificateur d'opération de restauration de la table de référence et de changement en produisant un signal de commande interne de contrôle de la table de référence et de changement,
- le premier module de stockage de la table de référence et de changement comprend en outre une sortie de données destinée à sortir la valeur d'un article correspondant à un bloc en réponse à l'adresse interne qui spécifie le bloc, et
- le moyen de table de référence et de changement de la mémoire comporte en outre des moyens (64, 66) de sortie d'article, intercalés entre la sortie de données et les circuits de données internes et étant sensibles au signal de commande interne de contrôle de la table de référence et de changement, de manière à valider la sortie de la valeur de l'article aux circuits de données internes,
- le premier moyen de la table de référence et de changement fonctionnant en réponse à l'adresse interne qui spécifie un certain bloc et au signal de commande interne de contrôle de la table de référence et de changement, de manière à sortir la valeur de l'article correspondant au bloc donné aux circuits de données internes.
